# EUROPEAN PATENT SPECIFICATION

(11) **EP 2 400 579 B1**
(45) Date of publication and mention of the grant of the patent: **06.03.2013**
(21) Application number: 10181564.5
(22) Date of filing: 29.09.2010
(51) Int. Cl.: H01M 10/50, H01M 2/10, H01M 10/04

(54) **Battery assembly with cooling**
Batterieanordnung mit Kühlung
Ensemble formant batterie doté de refroidissement

(30) Priority: 24.06.2010 US 358350 P; 23.09.2010 US 889119
(43) Date of publication of application: 28.12.2011
(73) Proprietor: Samsung SDI Co., Ltd., Gyeonggi-do (KR); Robert Bosch GmbH, 70442 Stuttgart (DE)
(72) Inventor: Yajima, Seijiro, Gyeonggi-do (KR); Sohn, Kwon, Gyeonggi-do (KR); Kim, Tae-Yong, Gyeonggi-do (KR)
(74) Representative: Gulde Hengelhaupt Ziebig & Schneider

(56) References cited:
- WO-A1-2008/102228
- JP-A- 2009 211 829
- US-A1- 2009 191 452
- US-A1- 2010 059 299

## Description

### BACKGROUND OF THE INVENTION

### (a) Field of the Invention

The present invention relates to a battery cooling device. More particularly, the present invention relates to a battery cooling device for cooling a battery using natural convection.

### (b) Description of the Related Art

A rechargeable battery differs from a primary battery in that it can be repeatedly charged and discharged, while the latter makes only the irreversible conversion of chemical to electrical energy. The low-capacity rechargeable battery is used as the power supply for small electronic devices, such as cellular phones, notebook computers and camcorders, while the high-capacity rechargeable battery is used as the power supply for driving motors in hybrid vehicles and the like.

In general, the rechargeable battery includes an electrode assembly including a positive electrode, a negative electrode, and a separator interposed between the positive and negative electrodes, a case receiving the electrode assembly, and an electrode terminal electrically connected to the electrode assembly. In this case, the case may have a cylindrical or rectangular shape depending on the purpose of use and the usage of the rechargeable battery, and electrolyte solution is injected into the case for charging and discharging of the rechargeable battery through an electrochemical reaction of the positive electrode, the negative electrode, and the electrolyte solution.

Such a rechargeable battery may be used as a battery module formed of a plurality of unit batteries coupled in series so as to be used for motor driving of a hybrid vehicle that requires high energy density. That is, the battery module is formed by connecting an electrode terminal of each of the plurality of unit batteries in consideration of power required for motor driving such that a high power rechargeable battery can be realized.

In order to safely use the battery module, heat generated from the rechargeable battery should be efficiently emitted, discharged and/or dissipated. If the heat emission/discharge/dissipation is not sufficiently performed, a temperature deviation occurs between the respective unit batteries so that the battery module cannot generate a desired amount of power for motor driving. In addition, when the internal temperature of the battery is increased due to the heat generated from the rechargeable battery, an abnormal reaction occurs therein and thus charging and discharging performance of the rechargeable is deteriorated and the life-span of the rechargeable battery is shortened.

Recently, a high power rechargeable battery that includes a nonaqueous electrolyte having a high energy density has been developed. When the high-power rechargeable battery is configured with high capacity, the rechargeable battery is charged and discharged by high current and the internal temperature of the rechargeable battery is increased to a significant level depending on a use state. Thus, a cooling device that can cool the rechargeable battery by effectively emitting/discharging/dissipating heat generated from the battery is required.

JP 2009 211829 A discloses a battery assembly comprising a pair of battery packs arranged inside a housing which is adapted to receive the pair of battery packs, the battery packs facing each other, and each of the battery packs comprising at least one battery module, wherein each battery module comprises a plurality of unit batteries, wherein a gap is interposed between the pair of battery packs thereby forming a first flow path and a gap is disposed between each of the pair of battery packs and an inner surface of the housing thereby forming a second flow path.

WO 2008/102228 A1 discloses a battery assembly, comprising a pair of battery packs arranged inside a housing which is adapted to receive the pair of battery packs, the battery packs facing each other, and each of the battery packs comprising at least one battery module, wherein each battery module comprises a plurality of unit batteries, and wherein a gap is interposed between the pair of battery packs thereby forming a first flow path and a gap is disposed between each of the pair of battery packs and an inner surface of the housing thereby forming a second flow path.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a battery cooling device according to claim 1 that can effectively cool a battery with a simple structure.

A battery cooling device (also referred to as battery assembly) according to an exemplary embodiment of the present invention comprises a pair of battery packs arranged inside a housing which is adapted to receive the pair of battery packs, the battery packs facing each other, and each of the battery packs comprising at least one battery module, wherein each battery module comprises a plurality of unit batteries, and wherein a gap is interposed between the pair of battery packs thereby forming a first flow path and a gap is disposed between each of the pair of battery packs and an inner surface of the housing thereby forming a second flow path, wherein the first flow path and the second flow path form a closed loop and a gap between the pair of battery packs in a lower portion of the first flow path is greater than a gap between the pair of battery packs in an upper portion of the first flow path, wherein a gap between the pair of battery packs gradually narrows from a lower portion to an upper portion of the first flow path and/or wherein a gap between the housing and each of the battery packs is formed to be gradually widened from an upper portion to a lower portion of the second flow path.

Preferably a side portion of the housing is formed of a material with a thermal conductivity of greater than 100 W/(m*K). Preferably an upper portion of the housing comprises a heat insulating member being formed of a material with a thermal conductivity of smaller than 100 W/(m*K). Preferably the housing is formed of a metal and/or wherein the heat insulating member is formed of a resin.

Preferably the housing (and any other material referred to as comprising a high heat conductivity) is formed of a material with a thermal conductivity of greater than 100 W/(m*K), preferably greater than 200 W/(m*K), more preferably greater than 300 W/(m*K) and still more preferably greater than 400 W/(m*K). Preferably the heat insulating member (and any other material referred to as a heat insulating material) is formed of a material with a thermal conductivity of smaller than 100 W/(m*K), preferably smaller than 80 W/(m*K), more preferably smaller than 60 W/(m*K) and still more preferably smaller than 40 W/(m*K).

Preferably (at least a side portion of) the housing is formed of a material selected from the group consisting of steel, stainless steel, aluminum, zinc-coated steel, and a combination thereof.

Preferably a gap between each of the battery packs and the housing in an upper portion of the second flow path is smaller than a gap between the each of battery packs and the housing in a lower portion of the second flow path.

Preferably each of the plurality of unit batteries comprises at least one electrode terminal electrically connected to an electrode assembly, and the electrode terminal comprises a positive terminal connected to a positive electrode and a negative terminal connected to a negative electrode, wherein all electrode terminals of each of the pair of battery packs are formed in a respective common plane, and the common planes of the pair of battery packs are arranged to face each other.

Preferably a cross-section width of the heat insulating member is greater than a gap between the pair of battery packs in the upper portion of the first flow path. Preferably a cross-section width of the heat insulating member ranges between 101% and 500%, more preferably between 110% and 300% and still more preferably between 150% and 250% of the gap between the pair of battery packs in the upper portion of the first flow path.

Preferably a longitudinal axis of the first flow path is coincident with a central portion of the heat insulating member.

Preferably a portion of each of the battery packs facing towards the housing comprises a supporting member being formed of a heat insulating material with a thermal conductivity of smaller than 100 W/(m*K).

Preferably the battery cooling device does not comprise a fan adapted to circulate a coolant inside the housing thereby generating compulsive convection. Preferably the battery assembly further comprises cooling members formed at upper side portions of the housing. Preferably the cooling member is formed by a thermoelectric element. More preferably the cooling member is formed by a Peltier device.

Preferably the battery assembly further comprises counterflow blocking protrusions formed in the second flow path. Preferably the counterflow blocking protrusions are obliquely protruding in a direction toward a lower portion of the second flow path. Preferably the counterflow blocking protrusions comprise first protrusions protruding from a supporting member of the battery pack. Preferably the counterflow blocking protrusions comprise second protrusions protruding from the housing. Preferably the first and second protrusions are integrally formed with the supporting member and the housing, respectively.

Preferably the supporting member covers the upper, lower and outer portion (the outer portion is facing toward the housing) of each of the stacks. Preferably the supporting member has a gradually decreasing thickness in the upper portion of the stacks.

Preferably a gaseous coolant is filled in the first flow path and in the second flow path. Preferably air is filled as a coolant in the first flow path and in the second flow path.

A vehicle according to an exemplary embodiment of the present invention comprises a battery assembly according to at least one of the above described features. Preferably a lower portion of the housing is formed by a bottom portion of the vehicle.

According to the exemplary embodiment of the present invention, the battery can be effectively cooled by generating natural convection with a simple structure rather than equipping an additional fan.

In addition, since electrical energy is not additionally used for cooling, the use time of the battery increased so that the driving distance of an electric vehicle can be increased.

### BRIEF DESCRIPTION OF THE DRAWINGS

FIG. 1 is a schematic cross-sectional view of a battery cooling device according to a first exemplary embodiment of the present invention.
FIG. 2 is a perspective view of a battery module of the battery cooling device according to the first exemplary embodiment of the present invention.
FIG. 3 shows two battery packs of the battery cooling device according to the first exemplary embodiment of the present invention in a perspective view.
FIG. 4 schematically shows the battery cooling device in the natural convection state according to the first exemplary embodiment of the present invention.
FIG. 5 schematically shows a battery cooling device according to a second exemplary embodiment of the present invention.
FIG. 6 schematically shows a battery cooling device according to a third exemplary embodiment of the present invention.
FIG. 7 schematically shows a battery cooling device in the state of being applied to a vehicle according to an exemplary embodiment of the present invention.

### DETAILED DESCRIPTION OF THE EMBODIMENTS

Hereinafter, some exemplary embodiments of the present invention will be described in detail with reference to the accompanying drawings in order for those skilled in the art to be able to readily implement them. The size and thickness of each component shown in the drawings are arbitrarily shown for better understanding and ease of description, and thus the present invention is not limited to those shown in the drawings. Like reference numerals designate like elements throughout the specification and the drawings.

### <Description of symbols>

| | | | |
|---|---|---|---|
| 10: | battery module | 11: | electrode terminal |
| 13: | bus bar | 15: | unit battery |
| 17: | connection member | 20: | supporting member |
| 30: | battery pack | 40: | housing |
| 41: | heat insulating material | 50: | first flow path |
| 60: | second flow path | 70: | vehicle bottom portion |
| 100, 101, 102: | battery cooling device | 143: | cooling member |
| 265: | counterflow blocking protrusion | 200: | vehicle |

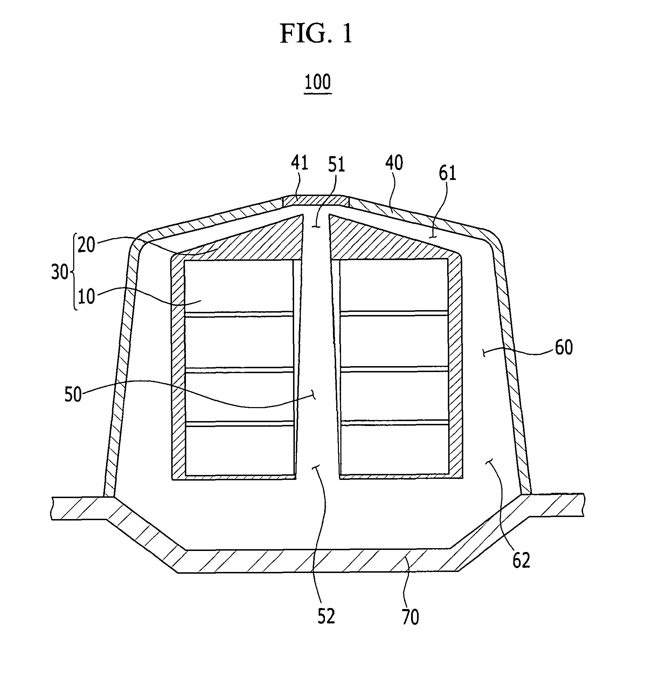

FIG. 1 is a cross-sectional view of a battery cooling device 100 (as referred to as battery assembly) according to a first exemplary embodiment of the present invention.

The battery cooling device 100 according to the present exemplary embodiment includes a battery pack 30 and a housing 40 receiving the battery pack 30. The battery pack 30 includes at least one battery module 10 and a supporting member 20 supporting the battery module 10. More preferably, each of the battery packs 30 comprises at least two battery modules 10.

In the present exemplary embodiment, battery packs 30 provided as a pair are disposed facing each other with a gap therebetween in the housing 40 such that a first flow path 50 is formed through which a coolant can flow. In addition, the pair of battery packs 30 is disposed while having a predetermined gap with an inner surface of the housing 40 such that a second flow path 60 through which the coolant can flow.

Accordingly, the coolant flows through the first and second flow paths 50 and 60 to absorb heat generated from the battery module 10 and emits the heat to the outside to thereby cool the battery module 10. The coolant flows through the first flow path 50 and the second flow path 60 is circulated within the battery cooling device 100 by natural convection rather than by an additional device (e.g., fan) that compulsively circulates the coolant. A mechanism that generates the natural convection will be described in further detail later.

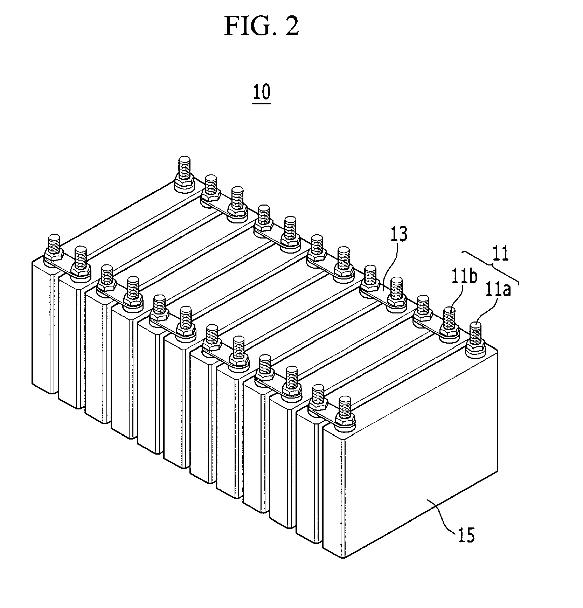

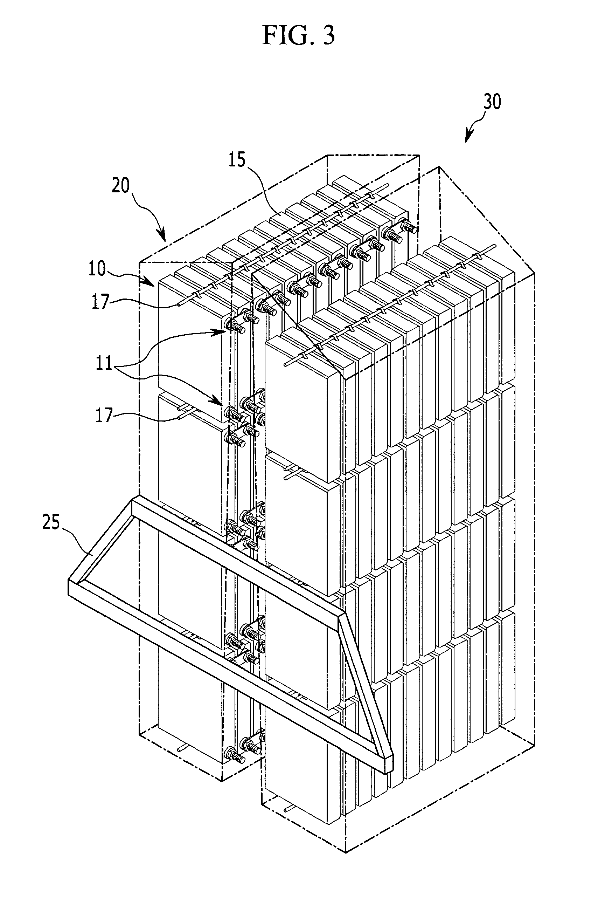

FIG. 2 is a perspective view of the battery module 10 of the battery cooling device 100 according to the first exemplary embodiment of the present invention, and FIG. 3 shows two battery packs 30 of the battery cooling device 100 according to the first exemplary embodiment of the present invention from one side. The battery pack 30 according to the present exemplary embodiment will be described in further detail with reference to Figs. 2 and 3.

The battery module 10 of the present exemplary embodiment is formed of a plurality of unit batteries 15 coupled in series. Each unit battery 15 includes an electrode assembly including a positive electrode, a negative electrode, and a separator interposed between the positive and negative electrodes, and a case having an inner space receiving the electrode assembly. In addition, each unit battery 15 includes an electrode terminal 11 electrically connected to the electrode assembly, and the electrode terminal 11 includes a positive terminal 11 a connected to the positive electrode and a negative terminal 11 b connected to the negative electrode.

Electrode terminals 11 of adjacent unit batteries 15 are disposed in a crossed manner. As shown in FIG. 2, positive terminals 11a and negative terminals 11b of adjacent unit batteries 15 may be electrically connected by a bus bar 13, and accordingly, the battery module 10 is formed of a plurality of unit batteries 15 coupled in series.

However, the configuration of the unit battery 15 is not limited thereto. For example, the unit battery 15 may have a structure in which an upper portion of the case can be opened and may further include a cap assembly to cover the same. In addition, the cap assembly may include an electrolyte injection hole to inject electrolyte into the case, and may further include a vent member formed to emit gas generated in the case to the outside. As described, the configuration of the unit battery 15 may be variously modified into the shapes well known to a person of an ordinary skill in the art.

FIG. 3 is a perspective view of the battery packs 30. A fixing member 25 is installed at at least one side of the supporting member 20, wherein the fixing member 25 is formed such not to interrupt the second flow path 60. The fixing member 25 connects and fixes the supporting member 20 to the housing 40. The fixing member 25 may comprise an insulating material, and may be formed in various shapes.

Referring to FIG. 3, the battery module 10 is received and supported by the supporting member 20. FIG. 3 shows a perspective view of the battery packs 30 of FIG. 1. Portions where the electrode terminals 11 of the battery module 10 are formed face each other, and as previously described, the first flow path 50 is formed therebetween.

Each battery module 10 is fixed to the supporting member 20 and stacked thereto. Connection member 17 for stably connecting and fixing the unit batteries 15 of the battery module 10 are extended along both sides of the plane where the electrode terminal 11 is formed. In this case, the connection member 17 may have a rod shape or a plate shape.

Referring to FIG. 3, the connection member 17 is fixed to the supporting member 20 by penetrating therethrough. In this case, connection between the connection member 17 and the supporting member 20 may be variously modified. For example, when the connection member 17 is formed in the rod shape, threads may be formed at both ends of the connection member 17 such that the connection member 17 can be screw engaged to the supporting member 20 using a nut.

As described, in the present exemplary embodiment, the battery module 10 can be fixed to the supporting member 20 using the connection member 17 for stable connection of the battery module 10. Thus, the battery pack can be formed with a simple structure, and the battery module 10 can be stably fixed to the supporting member 20 so that misarrangement of the battery module 10 due external impact can be prevented. Meanwhile, like the supporting member 20, the connection member 17 may be formed with a heat insulating material to prevent heat generated from the battery module 10 from being emitted to the outside therethrough.

A portion of the supporting member 20, receiving and covering the battery module 10 may be formed with a heat insulating material including a resin such as polypropylene to prevent control the heat generated from the battery module 10 to be transmitted only to the coolant flowing in the first flow path 50 rather than being directly transmitted to the coolant flowing in the second flow path 60. This will be described in further detail later.

In the present exemplary embodiment, one battery pack 30 includes four battery modules 10, but the present invention is not limited thereto. That is, one battery pack may include at least one battery module according to the purpose and use of the secondary battery.

Referring back to FIG. 1, the battery cooling device 100 according to the present exemplary embodiment may include a heat insulating member 41 formed between the first and second flow paths 50 and 60. If the coolant is cooled by emitting the heat to the outside right after being passed through the first flow path 50, the cooled coolant may go down and flow backward to the first flow path 50. However, the heat insulating member 41 is formed between the first and second flow paths 50 and 60 to prevent the coolant from being cooled right after being passed through the first flow path 50 to thereby prevent the flowing backward of the coolant. Similar to the heat insulating member of the supporting member 20 of the battery pack 30, the heat insulating member 41 may include a resin such as polypropylene.

Meanwhile, the housing 40 is formed of a material having high heat conductivity, such as a metal. Thus, the heat generated from the battery module 10 is transmitted to the coolant in the first flow path 50 and then emitted to the outside through the housing 40 in the second flow path 60. In addition, the battery cooling device 100 may be applied to a hybrid vehicle. In this case, as shown in FIG. 1, the housing 40 of the battery cooling device 100 may be fixed to a vehicle bottom portion 70 of the vehicle, and accordingly heat transmitted to the coolant may be emitted to the outside through the vehicle bottom portion 70.

A gap between a pair of battery packs 30 in a lower portion 52 of the first flow path 50 may be smaller than or equal to a gap between a pair of battery packs 30 in an upper portion 51 of the first flow path 50. In addition, a gap between the battery pack 30 and the housing 40 in an upper portion 61 of the second flow path 60 may be equal to or greater than a gap between the battery pack 30 and the housing 40 in a lower portion 62 of the second flow path 60.

In the present specification, the term "lower portion" and "upper portion" are respectively defined with reference to the gravity application direction, and "lower portion" implies a direction to which the gravity is applied and "upper portion" implies the opposite direction. In the present exemplary embodiment, the lower portion of the battery pack (and corresponding, most adjacent portion of the housing) is a portion which faces towards the vehicle bottom portion 70 and an upper portion of the battery pack (and corresponding, most adjacent portion of the housing) is a portion which faces away from the vehicle bottom portion 70.

In the present exemplary embodiment, the battery is cooled by convection and heat conduction of the coolant. In general, the convection implies that heat is transferred through a vertical movement of the fluid by the buoyant force, and the heat conduction implies that the heat is transferred to a high-temperature area to a low-temperature area without being attended with a movement of an object. That is, in the battery cooling device 100 of the present exemplary embodiment, the coolant receives the heat generated from battery module 10 and transfers the heat through convection, and the transferred heat is emitted to the outside through heat conduction such that the battery is cooled.

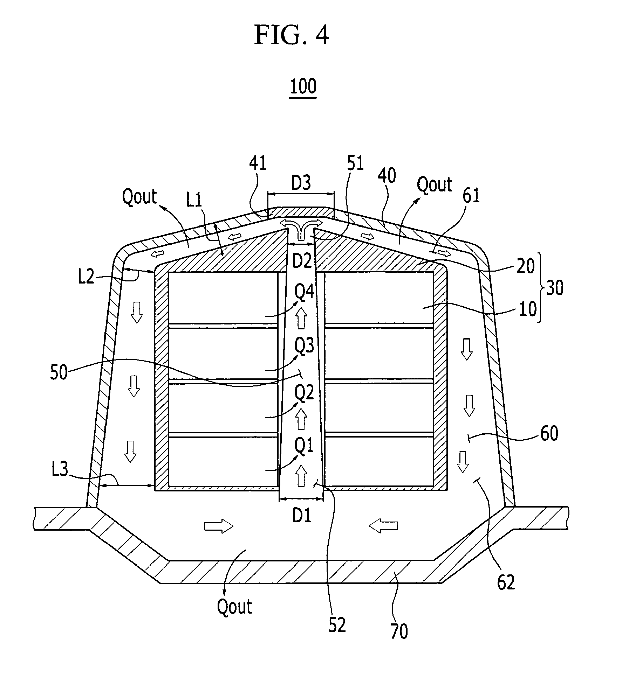

FIG. 4 shows the battery cooling device according to the first exemplary embodiment of the present invention in the natural convection state, and a mechanism of circulation of the coolant in the battery cooling device 100 according to the present exemplary embodiment will be described in further detail.

Heats Q1, Q2, Q3, and Q4 generated from the battery module 10 are transferred to the coolant in the first flow path 50. As described above, since a portion of the supporting member 20, contacting the second flow path 60 is formed with a heat insulating material such as polypropylene, the heats Q1, Q2, Q3, and Q4 generated from the battery module 10 cannot be transferred to the coolant in the second flow path 60. That is, the heats Q1, Q2, Q3, and Q4 are transferred only to the coolant in the first flow path 50. Meanwhile, gas such as air is used as the coolant in the present exemplary embodiment.

The heat Q1 generated from the battery module 10 is transferred to the coolant in the lower portion 52 of the first flow path 50 such that the temperature of the coolant is increased and the density is decreased, and accordingly the buoyant force is generated from the coolant and thus the coolant moves upward along the first flow path 50. While the coolant moves upward along the first flow path 50, the heats Q2, Q3, and Q4 generated from the upper portion of battery module 10 are sequentially transferred to the coolant, and accordingly, the coolant continuously moves upward to the upper portion 51 of the first flow path 50.

As described above, in the first flow path 50, a gap D1 between one pair of battery packs in the lower portion 52 is equal to or greater than a gap D2 between one pair of battery packs in the upper portion 51. In further detail, a gap between one pair of battery packs 30 is gradually narrowed from the lower portion 52 to the upper portion 51 of the first flow path 50 according to the present exemplary embodiment

That is, since the first flow path 50 of the present exemplary embodiment has a cross-section shape of a nozzle, the coolant moves upward by temperature increase of the coolant and the flowing speed of the coolant is increased by the nozzle effect so that the coolant can be more easily flow.

In addition, in each of the battery modules 10 in a pair of battery pack 30, the planes where the electrode terminals 11 are formed are arranged to face each other so that the heats Q1, Q2, Q3, and Q4 generated from the battery module 10 can be effectively transferred to the coolant flowing in the first flow path 50 through the electrode terminal 11 and the bus bar 13 of the battery module 10.

As described, the coolant moved upward along the first flow path 50 reaches the housing 40, and with reference to FIG. 4, it flows to the second path 60 formed between the battery 30 and the housing 40.

The housing 40 may further include the heat insulating material 41 formed between the first and second flow paths 50 and 60. As described above, the heat insulating member 41 functions to prevent counterflow of the coolant by preventing the coolant of which the temperature is increased while flowing through the first flow path 50 from being cooled.

After passing through the heat insulating material 41, the coolant is cooled as the heat is emitted to the outside by the housing 40 such that the temperature of the coolant is decreased. Thus, the coolant moved out from the first flow path 50 moves to the lower portion of the battery cooling device 100 along the second flow path 60 by the inertia moving in the first flow path 50 and the gravity increasing as the coolant is passed through the heat insulating material 41 and then cooled by the housing 40.

In the present exemplary embodiment, as shown in FIG. 4, a cross-section width D3 of the heat insulating material 41 is set to be greater than the gap D2 between the pair of battery packs in the upper portion 51 of the first flow path 50. With such a structure, cooling of the coolant moved upward along the first flow path 50 can be effectively prevented by the heat insulating member 41 such that the counterflow of the coolant to the first flow path 50 can be prevented.

The coolant passed through the first flow path 50 is passed through the heat insulating material 41 and cooled by being in contact with the housing 40 while flowing along the second flow path 60. The second flow path 60 is formed between the housing 40 and the battery pack 30. The housing 40 is formed of a material having high heat conductivity such as a metal, and the portion of the supporting member 20 of the battery pack 30, contacting the coolant in the second flow path 60 is formed of a heat insulating material such as polypropylene. In addition, the outside of the housing 40 maintains a room temperature since it is connected to the atmosphere. Thus, while the coolant flows through the second flow path 60, the heat is emitted to the outside through the housing 40 and accordingly, the temperature of the coolant is decreased and the density thereof is increased such that the coolant moves from the upper portion 61 of the second flow path 60 to the lower portion 62 thereof.

As described above, in the second flow path 60, a gap L1 between the housing 40 and the battery pack 30 in the upper portion 61 is smaller than or equal to a gap L3 between the housing 40 and the battery pack 30 in the lower portion 62. In further detail, the gap between the housing 40 and the battery pack 30 of the present exemplary embodiment is formed to be gradually widened from the upper portion 61 of the second flow path 60 to the lower portion 62 thereof as shown in L1, L2, and L3 of FIG. 4. As described, the second flow path 60 has a cross-section shape of a diffuser so that the flowing speed of the coolant can be decreased, and accordingly heat radiation/dissipation of the coolant can be further performed through the housing 40 in a reliable manner.

Through the above-described process, the coolant passed through the second flow path 60 moves toward the lower portion of the battery cooling device 100. The battery cooling device 100 may be fixed to an upper portion such as a vehicle bottom portion 70 of a vehicle. In this case, with the above-described structure, additional heat radiation/dissipation of the coolant can be performed through the vehicle bottom portion 70.

Referring back to FIG. 4, the coolant moves down to the lower portion of the battery cooling device 100, and moves upward again by the rising air stream formed in the first flow path 50 and the heats Q1, Q2, Q3, and Q4 that are continuously generated from the battery module 10, and accordingly, it circulates again in the battery cooling device 100 along the first and second flow paths 50 and 60. That is, the first flow path 50 and (a part of) the second flow path 60 form a closed loop (closed curve). More particularly, the first and second flow paths 50 and 60 form a closed double loop as schematically depicted by the infinity sign "∞".

As described, the battery cooling device 100 according to the present exemplary embodiment formed to be able to generate the natural convection so that it can cool the battery with a simple structure without using a device such as a fan for compulsive convection. In addition, when the cross-section of the flow path of the coolant is formed in a nozzle or diffuser shape, the natural convection can be smoothly performed and simultaneously heat can be sufficiently emitted to the outside so that the battery can be effectively cooled. Further, the heat insulating material is additional formed between the first and second flow paths to effectively prevent the counterflow of the coolant.

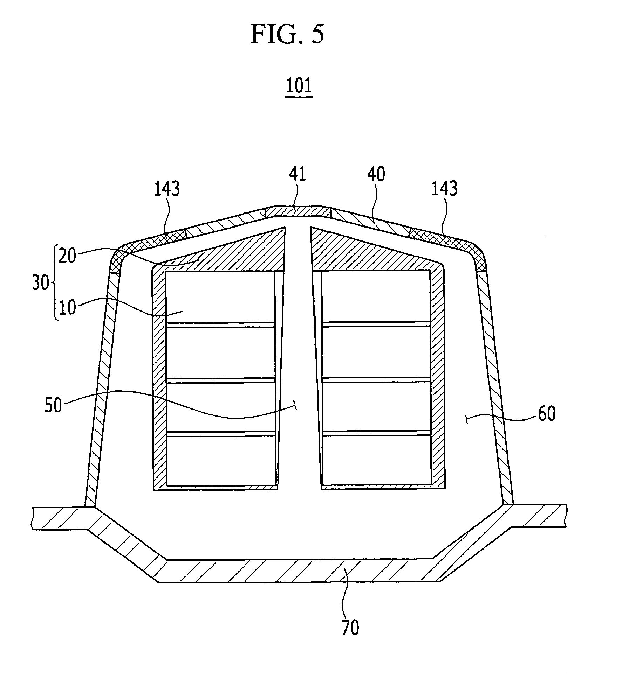

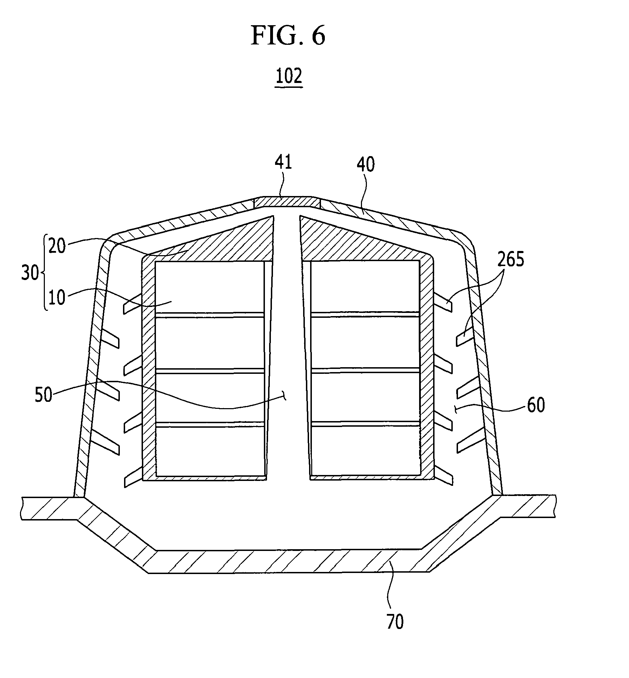

Hereinafter, other exemplary embodiments of the present invention will be described with reference to FIG. 5 and FIG. 6. In the exemplary embodiments, the same construction as the first exemplary embodiment is simply described or a description thereof is omitted.

FIG. 5 is a schematic cross-sectional view of a battery cooling device 101 according to a second exemplary embodiment of the present invention. Similar to the battery cooling device 100 of the first exemplar embodiment, the battery cooling device 101 according to the present exemplary embodiment includes a battery pack 30 and a housing 40 receiving the same. Further, the battery pack 30 includes at least one battery module 10 and a supporting member 20 supporting the battery module 10.

A pair of battery packs 30 is arranged to face each other in the housing 40 with a gap therebetween so that a first flow path 50 through which a coolant can flow is formed in the gap. In addition, the pair of battery packs 30 has a predetermined gap with an inner surface of the housing 40 so that a second flow path 60 through which the coolant can flow is formed in the gap.

A heat insulating member 41 is formed between the first flow path 50 and the second flow path 60 to prevent the coolant from being cooled to thereby block the counterflow of the coolant passed through the first flow path 50 to the first flow path 50.

As shown in FIG. 5, the battery cooling device 101 according to the present exemplary embodiment further includes cooling members 143 formed at both sides of an upper portion of the housing 40. The cooling member 143 cools the coolant flowing in the second flow path 60. The coolant can be more quickly cooled because the heat can be radiated by the housing 40 and cooled by the cooling member 143 as well while flowing through the second flow path 60.

As described, in the present exemplary embodiment, since the coolant is rapidly cooled using the cooling member 143, the coolant of which density is rapidly increased moves fast along the second flow path 60 so that the circulation of the coolant can be smoothly performed. With such a structure, the coolant circulates in the battery cooling device 101 without installing an additional circulation device therein so that heat generated from the battery module 10 can be emitted and/or dissipated to the outside.

FIG. 6 is a schematic cross-sectional view of a battery cooling device 102 according to a third exemplary embodiment of the present invention. Referring to FIG. 6, similar to the battery cooling device 100 of the first exemplary embodiment, the battery cooling device 102 according to the present invention includes a battery pack 30 and a housing 40 receiving the battery pack 30. In addition, the battery pack 30 includes at least one battery module 10 and a supporting member 20 supporting the battery module 10.

A pair of battery packs 30 is arranged to face each other in the housing 40 with a gap therebetween so that a first flow path 50 through which a coolant can flow is formed in the gap. In addition, the pair of battery packs 30 has a predetermined gap with an inner surface of the housing 40 so that a second flow path 60 through which the coolant can flow is formed in the gap.

A heat insulating member 41 is formed between the first flow path 50 and the second flow path 60 to prevent the coolant from being cooled to thereby block the counterflow of the coolant passed through the first flow path 50 to the first flow path 50.

Meanwhile, the battery cooling device 102 according to the present exemplary embodiment further includes a counterflow blocking protrusion 265 formed in the second flow path 60 to prevent counterflow of the coolant. The counterflow blocking protrusion 265 obliquely protrude to a direction toward a lower portion 62 of the second flow path 60. Referring to FIG. 6, the counterflow blocking protrusion 265 may include a first protrusion protruding from the supporting member 20 of the battery pack 30 and a second protrusion protruding from the housing 40, and the first and second protrusions may respectively be integrally formed with the supporting member 20 and the housing 40.

The counterflow blocking protrusion 265 guides the coolant flowing along the second flow path 60 to flow toward the lower portion of the second flow path 60 to prevent the counterflow of the coolant for smooth circulation of the coolant by convection. With such a structure, the coolant circulates in the battery cooling device 102 without installing an additional circulation device therein so that heat generated from the battery module 10 can be emitted to the outside.

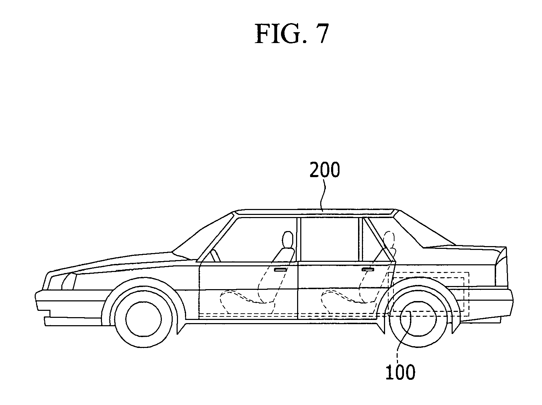

FIG. 7 schematically shows a state that a battery cooling device according to an exemplary embodiment of the present invention is applied to a vehicle.

Referring to FIG. 7, a battery cooling device 100 according to an exemplary embodiment of the present invention may be disposed in a trunk of a vehicle 200. That is, a lower portion of the vehicle 200 is disposed on a bottom portion of the vehicle 200 exposed to the ambient atmosphere of the vehicle 200, and a housing 40 of the battery cooling device 100 may be disposed in the trunk maintaining the room temperature. Accordingly, a coolant circulating in the battery cooling device 100 can emit heat into the trunk through the housing 40 of the battery cooling device 100, and additional heat radiation/dissipation can be performed through the bottom portion of the vehicle 200.

FIG. 7 exemplarily illustrates that the battery cooling devices according to the exemplary embodiments of the present invention are applied to a vehicle, and the present invention is not limited thereto. That is, the battery cooling device can be located in other positions in the vehicle, or may be applied to other apparatus or device using a high-capacity rechargeable battery.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A battery assembly (100, 101, 102), comprising a pair of battery packs (30) arranged inside a housing (40) which is adapted to receive the pair of battery packs (30), the battery packs (30) facing each other, and each of the battery packs (30) comprising at least one battery module (10), wherein each battery module (10) comprises a plurality of unit batteries (15), and
wherein a gap is interposed between the pair of battery packs (30) thereby forming a first flow path (50) and a gap is disposed between each of the pair of battery packs (30) and an inner surface of the housing (40) thereby forming a second flow path (60),
wherein the first flow path (50) and the second flow path (60) form a closed loop and a gap (D1) between the pair of battery packs (30) in a lower portion (52) of the first flow path (50) is greater than a gap (D2) between the pair of battery packs (30) in an upper portion (51) of the first flow path (50)
**characterized in that**
a gap (D1, D2) between the pair of battery packs (30) gradually narrows from a lower portion (52) to an upper portion (51) of the first flow path (50) and/or wherein a gap (L1, L2, L3) between the housing (40) and each of the battery packs (30) is formed to be gradually widened from an upper portion (61) to a lower portion (62) of the second flow path (60).

2. The battery assembly according to claim 1, wherein a side portion of the housing (40) is formed of a material with a thermal conductivity of greater than 100 W/(m*K) and/or wherein an upper portion of the housing (40) comprises a heat insulating member (41) being formed of a material with a thermal conductivity of smaller than 100 W/(m*K) and/or wherein the housing (40) is formed of a material selected from the group consisting of steel, stainless steel, aluminum, zinc-coated steel, and a combination thereof and/or wherein the heat insulating member (41) is formed of a resin.

3. The battery assembly according to any one of the preceding claims, wherein a gap (L1) between each of the battery packs (30) and the housing (40) in an upper portion (61) of the second flow path (60) is smaller than a gap (L3) between the each of battery packs (30) and the housing (40) in a lower portion (62) of the second flow path (60).

4. The battery assembly according to any one of the preceding claims, wherein each of the plurality of unit batteries (15) comprises at least one electrode terminal (11) electrically connected to an electrode assembly, and the electrode terminal (11) comprises a positive terminal (11 a) connected to a positive electrode and a negative terminal (11 b) connected to a negative electrode, wherein all electrode terminals (11) of each of the pair of battery packs (30) are formed in a respective common plane, and the common planes of the pair of battery packs (30) are arranged to face each other.

5. The battery assembly according to any one of claims 2 to 4, wherein a cross-section width (D3) of the heat insulating member (41) is greater than a gap (D2) between the pair of battery packs (30) in the upper portion (51) of the first flow path (50) and/or wherein a longitudinal axis of the first flow path (50) is coincident with a central portion of the heat insulating member (41).

6. The battery assembly according to any one of the preceding claims, wherein a portion of each of the battery packs (30) facing towards the housing (40) comprises a supporting member (20) being formed of a heat insulating material with a thermal conductivity of smaller than 100 W/(m*K).

7. The battery assembly according to any one of the preceding claims, wherein the battery cooling device does not comprise a fan adapted to circulate a coolant inside the housing (40) thereby generating compulsive convection.

8. The battery assembly according to any one of the preceding claims, further comprising cooling members (143) formed at upper side portions of the housing (40).

9. The battery assembly according to any one of the preceding claims, further comprising counterflow blocking protrusions (265) formed in the second flow path (60).

10. The battery assembly according to claim 11, wherein the counterflow blocking protrusions (265) are obliquely protruding in a direction toward a lower portion (62) of the second flow path (60).

11. The battery assembly according to any one of claim 9 and 10, wherein the counterflow blocking protrusions (265) comprise first protrusions (265) protruding from a supporting member (20) of the battery pack (30) and second protrusions (265) protruding from the housing (40), wherein the first and second protrusions (265) are integrally formed with the supporting member (20) and the housing (40), respectively.

12. The battery assembly according to any one of the preceding claims, wherein a gaseous coolant is filled in the first flow path (50) and in the second flow path (60).

13. A vehicle (200) comprising a battery assembly (100, 101, 102) according to any one of preceding claims, wherein a lower portion of the housing (40) is formed by a bottom portion of the vehicle (200).

## Patentansprüche

1. Batterieanordnung (100, 101, 102), aufweisend ein Paar von Batteriepacks (30), die in einem Gehäuse (40) angeordnet sind, das zum Erhalt des Paars von Batteriepacks (30) ausgebildet ist, wobei die Batteriepacks (30) einander zugewandt sind, und wobei jeder der Batteriepacks (30) zumindest ein Batteriemodul (10) aufweist, wobei jedes Batteriemodul (10) eine Vielzahl von Batterieeinheiten (15) aufweist, und
wobei ein Spalt zwischen dem Paar von Batteriepacks (30) eingefügt ist, wodurch ein erster Strömungsweg (50) ausgebildet wird, und wobei ein Spalt zwischen jedem aus dem Paar von Batteriepacks (30) angeordnet ist und eine Innenfläche des Gehäuses (40) dadurch einen zweiten Strömungsweg (60) ausbildet,
wobei der erste Strömungsweg (50) und der zweite Strömungsweg (60) einen geschlossenen Kreis ausbilden und ein Spalt (D1) zwischen dem Paar von Batteriepacks (30) in einem unteren Abschnitt (52) des ersten Strömungsweges (50) größer ist als ein Spalt (D2) zwischen dem Paar von Batteriepacks (30) in einem oberen Abschnitt (51) des ersten Strömungsweges (50),
**dadurch gekennzeichnet, dass**
ein Spalt (D1, D2) zwischen dem Paar von Batteriepacks (30) sich schrittweise von einem unteren Abschnitt (52) zu einem oberen Abschnitt (51) des ersten Strömungsweges (50) hin verengt, und/oder wobei ein Spalt (L1, L2, L3) zwischen dem Gehäuse (40) und jedem der Batteriepacks (30) derart ausgebildet ist, dass er sich schrittweise von einem oberen Abschnitt (61) zu einem unteren Abschnitt (62) des zweiten Strömungsweges (60) hin erweitert.

2. Batterieanordnung nach Anspruch 1, wobei ein Seitenabschnitt des Gehäuses (40) aus einem Material mit einer Wärmeleitfähigkeit von über 100 W/(m*K) ausgebildet ist, und/oder wobei ein oberer Abschnitt des Gehäuses (40) ein Wärmedämmelement (41) aufweist, das aus einem Material mit einer Wärmeleitfähigkeit von unter 100 W/(m*K) ausgebildet ist, und/oder wobei das Gehäuse (40) aus einem Material ausgebildet ist, das aus der Gruppe bestehend aus Stahl, rostfreiem Stahl, Aluminium, verzinktem Stahl und einer Kombination derselben ausgebildet ist, und/oder wobei das Wärmedämmelement (41) aus einem Harz ausgebildet ist.

3. Batterieanordnung nach einem der vorhergehenden Ansprüche, wobei ein Spalt (L1) zwischen jedem der Batteriepacks (30) und dem Gehäuse (40) in einem oberen Abschnitt (61) des zweiten Strömungsweges (60) kleiner ist als ein Spalt (L3) zwischen jedem der Batteriepacks (30) und dem Gehäuse (40) in einem unteren Abschnitt (62) des zweiten Strömungsweges (60).

4. Batterieanordnung nach einem der vorhergehenden Ansprüche, wobei jeder aus der Vielzahl der Batteriepacks (15) zumindest einen Elektrodenanschluss (11) aufweist, der mit einer Elektrodenanordnung elektrisch verbunden ist, und wobei der Elektrodenanschluss (11) einen positiven Anschluss (11a), der mit einer positiven Elektrode verbunden ist, und einen negativen Anschluss (11b) aufweist, der mit einer negativen Elektrode verbunden ist, wobei alle Elektrodenanschlüsse (11) von jedem des Paars der Batteriepacks (30) in einer jeweiligen gemeinsamen Ebene ausgebildet sind, und wobei die gemeinsamen Ebenen des Paars von Batteriepacks (30) derart angeordnet sind, dass sie einander zugewandt sind.

5. Batterieanordnung nach einem der Ansprüche 2 bis 4, wobei eine Querschnittsbreite (D3) des Wärmedämmelements (41) größer ist als ein Spalt (D2) zwischen dem Paar von Batteriepacks (30) im oberen Abschnitt (51) des ersten Strömungsweges (50), und/oder wobei eine Längsachse des ersten Strömungsweges (50) mit einem mittleren Abschnitt des Wärmedämmelements (41) übereinstimmt.

6. Batterieanordnung nach einem der vorhergehenden Ansprüche, wobei ein Abschnitt von jedem der Batteriepacks (30), der dem Gehäuse (40) zugewandt ist, ein Halteelement (20) aufweist, das aus einem Wärmedämmmaterial mit einer Wärmeleitfähigkeit von unter 100 W/(m*K) ausgebildet ist.

7. Batterieanordnung nach einem der vorhergehenden Ansprüche, wobei die Batteriekühlungsvorrichtung keinen Ventilator aufweist, der ausgebildet ist, ein Kühlmittel im Gehäuse (40) umzuwälzen, wodurch eine erzwungene Konvektion erzeugt würde.

8. Batterieanordnung nach einem der vorhergehenden Ansprüche, weiterhin aufweisend Kühlelemente (143), die an oberen Seitenabschnitten des Gehäuses (40) ausgebildet sind.

9. Batterieanordnung nach einem der vorhergehenden Ansprüche, weiterhin aufweisend Gegenstrom-Sperrvorsprünge (265), die im zweiten Strömungsweg (60) ausgebildet sind.

10. Batterieanordnung nach Anspruch 11, wobei die Gegenstrom-Sperrvorsprünge (265) schräg in eine Richtung hin zu einem unteren Abschnitt (62) des zweiten Strömungsweges (60) vorragen.

11. Batterieanordnung nach einem der Ansprüche 9 und 10, wobei die Gegenstrom-Sperrvorsprünge (265) erste Vorsprünge (265), die von einem Halteelement (20) des Batteriepacks (30) vorragen, und zweite Vorsprünge (265) aufweisen, die vom Gehäuse (40) vorragen, wobei die ersten und zweiten Vorsprünge (265) jeweils einstückig mit dem Halteelement (20) und dem Gehäuse (40) ausgebildet sind.

12. Batterieanordnung nach einem der vorhergehenden Ansprüche, wobei der erste Strömungsweg (50) und der zweite Strömungsweg (60) mit einem gasförmigen Kühlmittel gefüllt sind.

13. Fahrzeug (200), aufweisend eine Batterieanordnung (100, 101, 102) nach einem der vorhergehenden Ansprüche, wobei ein unterer Abschnitt des Gehäuses (40) durch einen Bodenabschnitt des Fahrzeugs (200) ausgebildet ist.

## Revendications

1. Assemblage de batteries (100, 101, 102) comprenant une paire de blocs-batteries (30) disposée à l'intérieur d'un boîtier (40) qui est conçu pour recevoir la paire de blocs-batteries (30), les blocs-batteries (30) se faisant mutuellement face, et chacun des blocs-batteries (30) comprenant au moins un module de batteries (10), chaque module de batteries (10) comprenant une pluralité de batteries unitaires (15), et
dans lequel un intervalle est ménagé entre les deux blocs-batteries (30) de la paire, en formant ainsi un premier trajet d'écoulement (50), et un intervalle est disposé entre chacun de la paire de blocs-batteries (30) et une surface intérieure du boîtier (40) en formant ainsi un second trajet d'écoulement (60),
dans lequel le premier trajet d'écoulement (50) et le second trajet d'écoulement (60) forment une boucle fermée et un intervalle (D1) entre les deux blocs-batteries (30) de la paire dans une portion inférieure (52) du premier trajet d'écoulement (50) est plus grand qu'un intervalle (D2) entre les deux blocs-batteries (30) de la paire dans une portion supérieure (51) du premier trajet d'écoulement (50),
**caractérisé en ce que** :
un intervalle (D1, D2) entre les deux blocs-batteries (30) de la paire se rétrécit progressivement d'une portion inférieure (52) à une portion supérieure (51) du premier trajet d'écoulement (50) et/ou un intervalle (L1, L2, L3) entre le boîtier (40) et chacun des blocs-batteries (30) est formé de manière à s'élargir progressivement d'une portion supérieure (61) à une portion inférieure (62) du second trajet d'écoulement (60).

2. Assemblage de batteries suivant la revendication 1, dans lequel une portion latérale du boîtier (40) est formée d'une matière ayant une conductivité thermique supérieure à 100 W/(m*K) et/ou dans lequel une portion supérieure du boîtier (40) comprend un élément thermo-isolant (41) formé d'une matière ayant une conductivité thermique inférieure à 100 W/(m*K) et/ou dans lequel le boîtier (40) est formé d'une matière choisie dans le groupe consistant en l'acier, l'acier inoxydable, l'aluminium, l'acier revêtu de zinc et une de leurs combinaisons et/ou dans lequel l'élément thermo-isolant (41) est formé d'une résine.

3. Assemblage de batteries suivant l'une quelconque des revendications précédentes, dans lequel un intervalle (L1) entre chacun des blocs-batteries (30) et le boîtier (40) dans une portion supérieure (61) du second trajet d'écoulement (60) est plus petit qu'un intervalle (L3) entre chacun desdits blocs-batteries (30) et le boîtier (40) dans une portion inférieure (62) du second trajet d'écoulement (60).

4. Assemblage de batteries suivant l'une quelconque des revendications précédentes, dans lequel chacune de la pluralité de batteries unitaires (15) comprend au moins une borne d'électrode (11) connectée électriquement à un assemblage d'électrodes, et la borne d'électrodes (11) comprend une borne positive (11A) connectée à une électrode positive et une borne négative (11b) connectée à une électrode négative, toutes les bornes d'électrode (11) de chacun de la paire de blocs-batteries (30) étant formées dans un plan commun respectif, et les plans communs de la paire de blocs-batteries (30) étant placés de manière à se faire mutuellement face.

5. Assemblage de batteries suivant l'une quelconque des revendications 2 à 4, dans lequel une largeur en section transversale (D3) de l'élément thermo-isolant (41) est supérieur à un intervalle (D2) entre les deux blocs-batteries (30) de la paire dans la portion supérieure (51) du premier trajet d'écoulement (50) et/ou dans lequel un axe longitudinal du premier trajet d'écoulement (50) coïncide avec une portion centrale de l'élément thermo-isolant (41).

6. Assemblage de batteries suivant l'une quelconque des revendications précédentes, dans lequel une portion de chacun des blocs-batteries (30) faisant face au boîtier (40) comprend un élément de support (20) formé d'une matière thermo-isolante ayant une conductivité thermique inférieure à 100 W/(m*K).

7. Assemblage de batteries suivant l'une quelconque des revendications précédentes, dans lequel le dispositif de refroidissement de batteries ne comprend pas de ventilateur conçu pour faire circuler un flux d'agent de refroidissement à l'intérieur du boîtier (40) en engendrant ainsi une convection forcée.

8. Assemblage de batteries suivant l'une quelconque des revendications précédentes, comprenant en outre des éléments de refroidissement (143) formés au niveau de portions latérales supérieures du boîtier (40).

9. Assemblage de batteries suivant l'une quelconque des revendications précédentes, comprenant en outre des protubérances de blocage à contre-courant (265) formées dans le second trajet d'écoulement (60).

10. Assemblage de batteries suivant la revendication 11, dans lequel les protubérances de blocage à contre-courant (265) sont saillies obliquement dans une direction vers une portion inférieure (62) du second trajet d'écoulement (60).

11. Assemblage de batteries suivant l'une quelconque des revendications 9 et 10, dans lequel les protubérances de blocage à contre-courant (265) comprennent des premières protubérances (265) faisant saillie d'un élément de support (20) du bloc-batterie (30) et des secondes protubérances (265) faisant saillie du boîtier (40), les premières et secondes protubérances (265) étant formés de manière intégrale avec l'élément de support (20) et le boîtier (40), respectivement.

12. Assemblage de batteries suivant l'une quelconque des revendications précédentes, dans lequel un fluide gazeux de refroidissement remplit le premier trajet d'écoulement (50) et le second trajet d'écoulement (60).

13. Véhicule (200) comprenant un assemblage de batteries (100, 101, 102) suivant l'une quelconque des revendications précédentes, dans lequel une portion inférieure du boîtier (40) est formée par une portion inférieure du véhicule (200).
